# EUROPEAN PATENT APPLICATION

(11) **EP 1 471 501 A2**
(43) Date of publication of application: **27.10.2004**
(21) Application number: 04252376.1
(22) Date of filing: 23.04.2004
(51) Int. Cl.: G10L 15/20, G10L 15/14

(54) **Speech recognition apparatus, speech recognition method, and recording medium on which speech recognition program is computer-readable recorded**

(30) Priority: 25.04.2003 JP 2003122337
(71) Applicant: Pioneer Corporation, Tokyo-to (JP)
(72) Inventor: Kobayashi, Hajime, c/o Pioneer Corporation, Tsurugashima-shi Saitama-ken (JP); Hanai, Kengo, c/o Pioneer Corporation, Yamada, Kawagoe-shi Saitama-ken (JP)
(74) Representative: Haley, Stephen

(57) **Abstract**

A speech recognizer 300 built into a navigation apparatus 100 includes a noise estimator 320 which calculates a noise model based on a microphone input signal, an adaptive processor 330 which performs an adaptive process on each keyword model and each non-keyword model stored in an HMM database 310 based on the noise model. The adaptive processor 330 performs a data adaptation process on each keyword model and non-keyword model based on the noise model and word spotting is performed based on the keyword models and the non-keyword models subjected to the data adaptation process.

## Description

The present invention relates to a technical field of recognition of keywords in uttered speech.

Today, there have been developed speech recognition apparatuses which recognize speech uttered by man. When a man speaks predetermined words, these apparatuses recognize sounds of the spoken words from input signals of spoken words.

If equipped with such a speech recognition apparatus, an in-vehicle navigation system or a personal computer will allow a user to enter various information without need for manual operations of keyboard or switch.

Thus, an operator can enter desired information in the apparatus even though he/she is using both hands to operate the navigation system during driving.

Typical speech recognition methods used for such a speech recognition apparatus include a method (hereinafter referred to simply as "speech recognition") which employs probability models known as HMMs (Hidden Markov Models).

Speech recognition is performed by matching feature patterns of spontaneous speech with feature patterns of candidate words called keywords which are prepared in advance.

Specifically, speech recognition involves analyzing inputted spontaneous speech (input signals) at predetermined time intervals, extracting feature values, calculating a degree of match (hereinafter referred to as similarity) between the feature values of the input signals and feature values of keywords represented by HMMs prestored in a database, accumulating similarity over the entire spontaneous speech, and deciding on the keyword with the highest similarity as a recognized keyword. This makes it possible to recognize predetermined words contained in the input signals of the spontaneous speech.

Incidentally, an HMM (hidden Markov model) is a statistical signal source model expressed as a set of transitioning states. It represents feature values of a keyword or the like to be recognized. Also, the HMM is generated based on a plurality of speech data sampled in advance.

It is important for speech recognition how to extract keywords contained in spontaneous speech.

Beside keywords, spontaneous speech generally contains non-keywords (words such as "er" or "um" before or after keywords) and in principle consists of keywords sandwiched by non-keywords. Thus, speech recognition often employs a word spotting technique (hereinafter referred to as word spotting speech recognition) to recognize keywords.

The word spotting speech recognition involves preparing HMMs which represent keywords as well as HMMs which represent non-keywords (e.g., garbage models) and performing speech recognition by recognizing a keyword HMM with the highest similarity, non-keyword HMM, or combination thereof.

A known speech recognition apparatus which uses word spotting speech recognition includes an apparatus which performs speech recognition taking noise conditions into consideration. See, for example, Patent Document: US 5956679.

However, with a speech recognition apparatus which employs the speech recognition method described above, the feature values of each HMM depend heavily on conditions under which speech data for learning is recorded (background noise, line distortion, speakers, length of vocal tract). Any difference between the recording conditions and actual conditions of speech recognition will cause a mismatch between input speech data and the feature values of HMMs, resulting in a low recognition rate.

That is, various spontaneous speech data is recorded to generate HMMs, and then the HMMs are generated based on the recorded spontaneous speech data. Any difference between the recording conditions and actual conditions of speech recognitionwill cause changes in feature values of spontaneous speech, and thus a mismatch between input data and the feature values of HMMs, resulting in a low recognition rate.

To prevent the lowering of the recognition rate due to a mismatch between input data and HMMs, HMMs can be created anew using speech data recorded under the same conditions as those under which recognition is performed. However, models such as HMMs which are based on a statistical technique require a vast amount of learning speech data which take hundreds of hours for processing.

The present invention has been made in view of the above problems and has an object to provide a speech recognition apparatus which adapts each keyword model and non-keyword model to actual speech recognition conditions, and thereby offers high speech recognition performance and high data-processing speed.

The above object of the present invention can be achieved by a speech recognition apparatus which recognizes spontaneous speech by comparing feature values that represent speech components of uttered spontaneous speech to prestored speech feature data that represents feature values of speech components of speech expected to be uttered, provided with: a storage device which prestores a plurality of speech feature data; a speech feature data acquisition device which acquires speech feature data from the storage device; a classification device which classifies each type of the prestored speech feature data into a plurality of data groups based on predetermined rules; an extraction device which extracts data group feature data that represents feature values of each of the classified data groups; an environmental data acquisition device which acquires environmental data about conditions of an environment in which the spontaneous speech is uttered; a generating device which generates the speech feature data for use to compare the feature values of the spontaneous speech, based on the prestored speech feature data, the attribute data that represents attributes of the classified data groups, the acquired data group feature data, and the environmental data; and a recognition device which recognizes the spontaneous speech by comparing the generated speech feature data to the feature values of the spontaneous speech.

The above object of the present invention can be achieved by a speech recognition method which recognizes spontaneous speech by comparing feature values that represent speech components of uttered spontaneous speech to prestored speech feature data that represents feature values of speech components of speech expected to be uttered, provided with: a speech feature data acquisition process which acquires speech feature data from a storage device which prestores a plurality of speech feature data; a classification process which classifies each type of the prestored speech feature data into a plurality of data groups based on predetermined rules; an extraction process which extracts data group feature data that represents feature values of each of the classified data groups; an environmental data acquisition process which acquires environmental data about conditions of an environment in which the spontaneous speech is uttered; a generating process which generates the speech feature data for use to compare the feature values of the spontaneous speech, based on the prestored speech feature data, the attribute data that represents attributes of the classified data groups, the acquired data group feature data, and the environmental data; and a recognition process which recognizes the spontaneous speech by comparing the generated speech feature data to the feature values of the spontaneous speech.

The above object of the present invention canbe achieved by a recording medium on which a speech recognition program is recorded in computer-readable form, characterized in that the speech recognition program makes a computer recognize spontaneous speech by comparing feature values that represent speech components of uttered spontaneous speech to prestored speech feature data that represents feature values of speech components of speech expected to be uttered, and makes the computer function as: a speech feature data acquisition device which acquires speech feature data from a storage device which prestores a plurality of speech feature data; a classification device which classifies each type of the prestored speech feature data into a plurality of data groups based on predetermined rules; an extraction device which extracts data group feature data that represents feature values of each of the classified data groups; an environmental data acquisition device which acquires environmental data about conditions of an environment in which the spontaneous speech is uttered; a generating device which generates the speech feature data for use to compare the feature values of the spontaneous speech, based on the prestored speech feature data, the attribute data that represents attributes of the classified data groups, the acquired data group feature data, and the environmental data; and a recognition device which recognizes the spontaneous speech by comparing the generated speech feature data to the feature values of the spontaneous speech.

In the Drawings;
FIG. 1 is a block diagram outlining a configuration of a navigation apparatus according to the present invention;
FIG. 2 is a block diagram showing a configuration of a speech recognizer according to an embodiment;
FIG. 3 is a block diagram showing a configuration of an adaptive processor according to the embodiment;
FIG. 4 is a diagram illustrating how barycentric vectors are calculated according to the embodiment;
FIG. 5 is a diagram illustrating a clustering process according to the embodiment;
FIG. 6 is a flowchart showing an operation of a speech recognition process performed by a navigation apparatus according to the embodiment;
FIG. 7 is a flowchart showing an operation of a clustering process,a barycentric vector calculation process, and a differential vector calculation process performed by an adaptive processor according to the embodiment; and
FIG. 8 is a table comparing speech recognition rates between the speech recognition process according to the embodiment and a conventional speech recognition process.

Next, a preferred embodiment of the present invention will be described with reference to drawings.

Incidentally, described below is an embodiment in which a speech recognition apparatus according to the present invention is applied to an in-vehicle navigation apparatus.

Non-keyword components described in this embodiment represent basic phonetic units, such as phonemes or syllables, which compose speech, but syllables will be used in this embodiment for convenience of explanation.

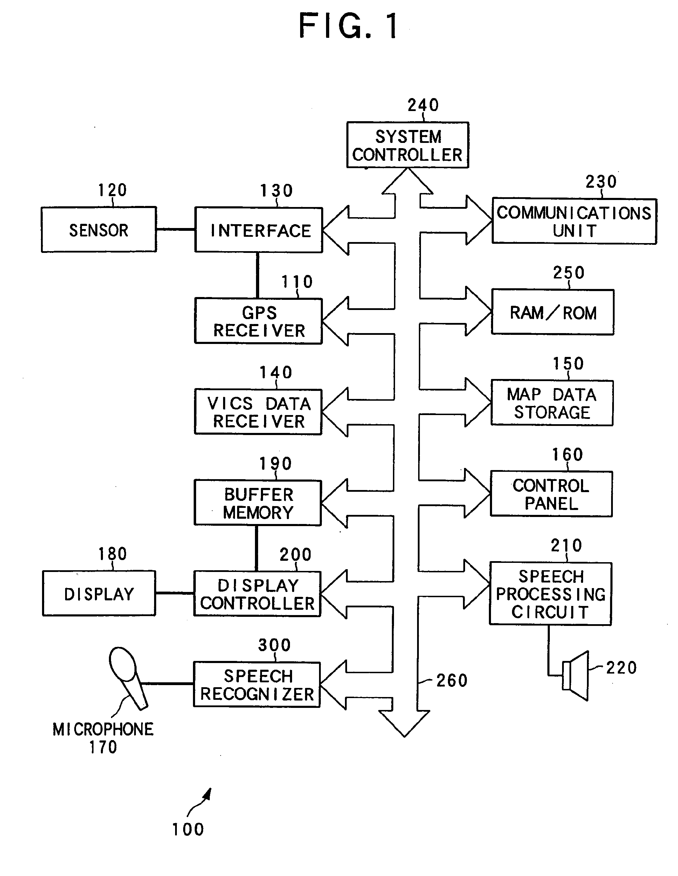

First, overall configuration of a navigation apparatus according to this embodiment will be described and its operation will be outlined with reference to FIG. 1.

FIG. 1 is a block diagram outlining configuration of a navigation apparatus according to the present invention.

The navigation apparatus 100 according to this embodiment is connected to an antenna AT (not shown) . As shown in FIG. 1, it comprises a GPS receiver 110 which receives GPS (Global Positioning System) data, a sensor 120 which detects travel data of a vehicle including travel speed, an interface 130 which calculates a vehicle position based on the GPS data and travel data, a VICS (Vehicle Information Communication System) data receiver 140 which receives VICS data, a map data storage 150 which prestores map data, a control panel 160 used by the user to make various settings and enter commands in the system, a microphone 170 which gathers user's voice, a speech recognizer 300 which recognizes commands given to the system among the sounds collected by the microphone 170, a display 180 which displays map data and vehicle position, a display controller 200 which controls the display 180 using a buffer memory 190, a speech processing circuit 210 which generates speech for route guidance and the like, a loudspeaker 220 which amplifies speech signals outputted from the speech processing circuit 210, a communications unit 230 which communicates with public telephone networks or Internet lines via the antenna AT, a system controller 240 which performs navigation processing such as route-finding and controls the entire system, and an RAM/ROM 250. The system controller 240 is connected with the other components via a bus 260.

The GPS receiver 110 receives radio waves from a plurality of satellites belonging to a GPS via the antenna AT, calculates pseudo coordinate values of current location of a mobile body, and outputs them as GPS data to the interface 130.

The sensor 120 detects travel data of the vehicle including travel speed, acceleration, and an azimuth and outputs the detected travel data to the interface 130.

Specifically, the sensor 120 detects the travel speed of the vehicle, converts it into speed data in pulse or voltage form, and outputs the speed data to the interface 130.

Also, the sensor 120 detects vertical movements of the vehicle by comparing acceleration generated by the running vehicle with gravitational acceleration, converts the detected movements into acceleration data in pulse or voltage form, and outputs the acceleration data to the interface 130.

Furthermore, the sensor 120, which consists of a so-called gyro sensor, detects the azimuth of the vehicle, i.e., traveling direction of the vehicle, converts the detected azimuth into azimuth data in pulse or voltage form, and outputs the azimuth data to the interface 130.

The interface 130 interfaces the sensor 120 and GPS receiver 110 with the system controller 240. It calculates the vehicle position based on inputted GPS data and travel data and outputs the vehicle position to the system controller 240 as vehicle position data.

Incidentally, the vehicle position data goes through map matching in which it is compared to map data by the system controller 240.

The VICS data receiver 140 acquires VICS data by receiving radio waves of FM multiplex broadcasting and outputs the acquired VICS data to the system controller 240.

Incidentally, the VICS is a traffic information communication system while VICS data refers to traffic information including traffic congestion, accidents, and regulations.

The map data storage 150 consists, for example, of a hard disk. It reads map data such as road maps and other information needed for navigational guidance (hereinafter referred to as "map data and the like") and outputs the retrieved map data and the like to the system controller 240.

In addition to the map data including road geometry data needed for navigation, the map data and the like includes names of destinations such as parks and shops and various related data such as location data which are stored being associated with the road geometry data. The entire map is partitioned into mesh of blocks and the map data which corresponds to each block is managed as block map data.

The control panel 160 consists of a remote control or the like which contains confirmation buttons, selection buttons, and a number of keys such as numeric keys. In particular, it is used by a driver to enter a command to start speech recognition and other commands.

The speech recognizer 300 is fedwith spontaneous speech entered by the user through the microphone 170. For example, the speech recognizer 300 analyzes spontaneous speech entered as operation commands for the navigation apparatus 100 and outputs analysis results to the system controller 240.

Details of configuration and operation of the speech recognizer 300 according to this embodiment will be described later.

The display 180 consists of a CRT or a liquid crystal display device. Under control of the display controller 200, the display 180 displays the map data and the like in various forms, superimposing over them the vehicle position and various other information needed for routing guidance.

The display 180 is also designed to display content information and the like other than the map data and the like and displays the content information based on instructions from the system controller 240 given via the display controller 200.

The display controller 200 is fed with the map data and the like via the system controller 240. Under instructions from the system controller 240, the display controller 200 generates display data to be presented on the display 180, stores it temporarily in the buffer memory 190, reads it from the buffer memory 190 with a predetermined timing, and outputs it to the display 180.

The speech processing circuit 210 generates speech signals based on instructions from the system controller 240 and amplifies the generated speech signals via the loudspeaker 220. It outputs the traveling direction of the vehicle at a next intersection, route guidance information including congestion information and street closure information to be provided directly to the driver for navigational guidance, and results of speech recognition produced by the speech recognizer 300, as speech signals to the loudspeaker 220.

The system controller 240 is equipped with various input/output ports, including a GPS receiving port, a key input port, and a display control port, and totally controls general functions for navigation processing.

The system controller 240 controls the entire navigation apparatus 100. It reads control programs out of the RAM/ROM 250 and executes various processes, temporarily stores data being processed in the RAM/ROM 250, and thereby performs control for route guidance.

For example, when performing navigation processing, the system controller 240 makes the speech recognizer 300--specifically, an adaptive processor 330 (described later)--analyze and recognize the spontaneous speech entered by the user through the microphone 170, acquires instruction commands for navigation processing from the recognized spontaneous speech, and controls various components.

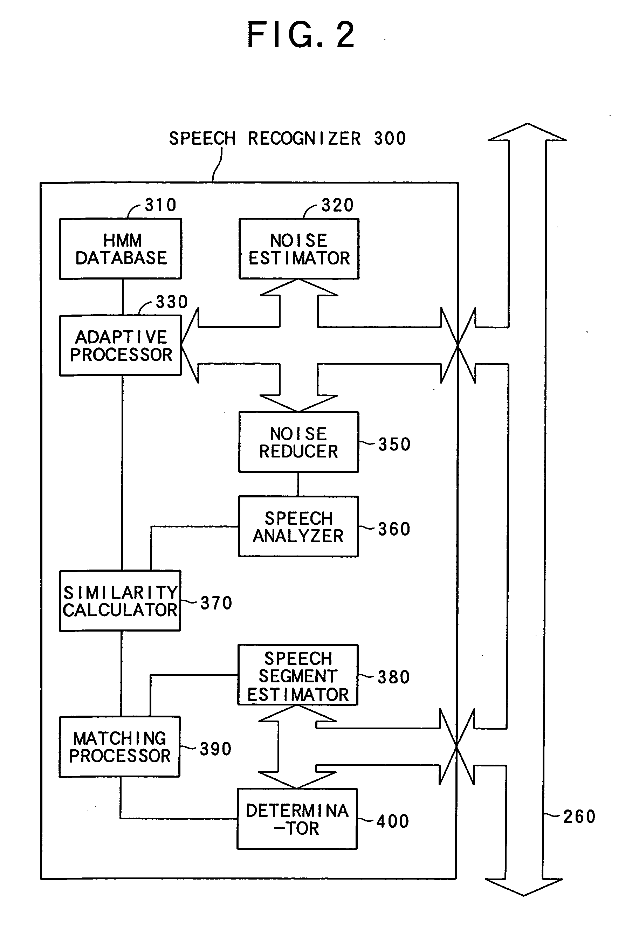

Next, the configuration and the operation of the speech recognizer according to this embodiment will be described with reference to FIG. 2.

FIG. 2 is a block diagram showing the configuration of the speech recognizer according to this embodiment.

As shown in FIG. 2, the speech recognizer 300 according to this embodiment comprises a HMM database 310 which prestores keyword models and non-keyword models, a noise estimator 320 which calculates a noise model feature values of noise based on a microphone input signal entered through the microphone 170, the adaptive processor 330 which performs an adaptive process on each HMM stored in the database based on the noise model on instructions from the system controller 240, a noise reducer 350 which reduces noise in the entire microphone input signal entered, a speech analyzer 360 which analyzes the microphone input signal on a frame-by-frame basis and extracts feature values of the microphone input signal, a similarity calculator 370 which calculates similarity of each frame by comparing the feature values of each frame subjected to speech analysis with the feature values of each HMM stored in the HMM database 310, a speech segment estimator 380 which estimates speech segments based on the entered microphone input signal, a matching processor 390 which calculates cumulative similarity of each combination of a keyword model and non-keyword model based on information about speech segments as well as on output probability and transition output probability of each frame, and a determinator 400 which determines the keyword with the highest cumulative similarity out of the cumulative similarities calculated for individual keywords as the appropriate keyword.

The noise estimator 320, the noise reducer 350, and the speech segment estimator 380 are fed with spontaneous speech signals via the bus 260 while the determinator 400 outputs the determined keyword to the system controller 240 via the bus.

Incidentally, for example, the HMM database 310 according to this embodiment serves as a storage device according to the present invention and the noise estimator 320 serves as an environmental data acquisition device according to the present invention.

Also, for example, the adaptive processor 330 according to this embodiment serves as a classification device, an extraction device, a generating device, and a speech feature data acquisition device according to the present invention; and the speech analyzer 360 serve as a spontaneous speech feature value acquisition device according to the present invention.

Furthermore, for example, the similarity calculator 370 according to this embodiment serves as a recognition device and a similarity calculation device according to the present invention; and matching processor 390 and determinator 400 according to this embodiment serves as a recognition device and a spontaneous speech recognition device according to the present invention.

The HMM database 310 stores HMMs which represent pattern data of the feature values of the keywords to be recognized (hereinafter referred to simply as "keyword models") and HMMs which represent pattern data of the feature values of non-keywords (hereinafter referred to simply as "non-keyword models"). The HMM database 310 outputs the stored HMMs to the adaptive processor 330.

Specifically, the HMM models stored in the HMM database 310 are output to the adaptive processor 330, where they go through an adaptive process on a user-by-user basis, i.e., on a speaker-by-speaker basis.

For example, the system controller 240 makes a user read a predetermined sentence and performs an adaptive process on the HMMs stored in the HMM database before speech recognition based on the spontaneous speech feature values of the sentence entered through the microphone 170. It stores the HMMs adapted to the speaker in the HMM database 310 each time speech recognition is performed.

According to this embodiment, the keywordmodels stored in the HMM database 310 include HMMs (hereinafter referred to as "keyword models") which represent feature patterns of speech signals including destination names and location names for the vehicle and facility names such as restaurant names.

Since a keyword normally consists of phonemes or syllables as is the case with "present location" or "destination," one keyword is represented by a plurality of HMMs which correspond to keyword components. Thus, the similarity calculator 370 calculates frame-by-frame feature values and similarity for the HMM of each keyword component. Consequently, the HMM database 310 actually stores the HMMs of each keyword.

Furthermore, according to this embodiment, the HMM database 310 stores HMMs (hereinafter referred to as "non-keyword models") which represent the feature values of a plurality of non-keywords. For example, it stores, patterns of a plurality of feature values as non-keyword component models classified by phoneme or syllable.

A process of generating an HMM of the feature values of each syllable involves acquiring speech data of each syllable uttered by a plurality of people, extracting a feature pattern of each syllable, and learning and generating feature pattern data of each syllable based on the feature pattern of each syllable.

Also, according to this embodiment, a process of generating speech data of non-keyword models involves generating a HMM of a feature pattern based on speech data of a plurality of syllables. That is, the generated non-keyword HMM comprises feature values of a plurality of syllables. The non-keyword HMMs of feature values of the plurality of syllables are generated for each phoneme or the like, and stored in the HMM database 310.

The noise estimator 320 is fed with an input signal (hereinafter referred to as a "microphone input signal") including user's utterance through the microphone 170, calculates a noise model from a predetermined initial segment of the entered microphone input signal (hereinafter the microphone input signal in this segment will be referred to as an "initial input signal") , and calculates feature values of noise sounds (hereinafter referred to as "noise feature values") for use in a noise reduction process based on the entered microphone input signal.

Specifically, the noise estimator 320 acquires the initial input signal which is the microphone input signal in the predetermined segment from start of user's utterance detected by the system controller 240, calculates a noise model for use in an adaptive process (described later) based on the acquired initial input signal, and outputs the calculated noise model in data form to the adaptive processor 330.

Incidentally, according to this embodiment, the noise estimator 320 acquires several hundred milliseconds of the microphone input signal from the start time of the microphone input signal. The noise model is a variable (parameter) for use in the adaptive process and is expressed as a feature parameter typified by mel-cepstrum or LPC (Linear Predictive Coding) cepstrum.

Also, the noise estimator 320 outputs, in data form, a spectral envelope that represents power of the microphone input signal at each frequency at regular time intervals or feature values (hereinafter referred to as "noise feature values") of cepstrum obtained from an inverse Fourier transform of logarithm of the power spectrum, to the noise reducer 350.

The adaptive processor 330 is fed with noise model data (hereinafter referred to simply as a "noise model") calculated by the noise estimator 320 and performs an adaptive process on keyword HMMs and non-keyword HMMs stored in the HMM database 310 based on the received noise model.

Specifically, the adaptive processor 330 performs clustering and other processes on keyword models and non-keyword models, performs data adaptation of HMMs (hereinafter referred to as a "data adaptation process") based on results of the clustering and other processes, and outputs the HMMs which have gone through the data adaptation process to the similarity calculator 370.

Incidentally, configuration of the adaptive processor 330 and details of the data adaptation process according to this embodiment will be described later.

The noise reducer 350 is fed with the microphone input signal entered by the user through the microphone 170 and the data of the noise feature values (hereinafter referred to as "noise feature data") calculated by the noise estimator 320, reduces noise in the entire microphone input signal based on the entered noise feature data, and outputs the denoised microphone input signal to a speech analyzer 360.

For example, the noise reducer 350 reduces noise in the entire microphone input signal using a spectral subtraction technique which removes noise from microphone input signals utilizing steady-state nature of the noise.

The speech analyzer 360 is fed with the denoised microphone input signal, divides it into frames at predetermined time intervals, analyzes the speech signal, and outputs frame-by-frame feature values of the speech signal to the similarity calculator 370.

Specifically, the speech analyzer 360 extracts spectral envelope information that represents power at each frequency at regular time intervals or cepstrum information obtained from an inverse Fourier transform of the logarithm of the power spectrum as the feature values on a frame-by-frame basis, converts the extracted feature values into vectors, and outputs the vectors to the similarity calculator 370.

For example, the speech analyzer 360 divides the microphone input signal into frames of 10 ms to 20 ms.

The similarity calculator 370 is fed with frame-by-frame feature vectors as well as keyword models and non-keyword models subjected to the data adaptation process, calculates similarity between each entered frame and each keyword model or non-keyword model by comparing the frame-by-frame feature vectors with the keyword models and non-keyword models, and outputs the calculated similarities to the matching processor 390.

Specifically, based on the feature values of each frame as well as on the feature values of each keyword model and non-keyword model, the similarity calculator 370 calculates probability that each frame matches each keyword model or non-keyword model.

For example, the similarity calculator 370 calculates output probability that each frame corresponds to each keyword model, output probability that each frame corresponds to each non-keyword model, state transition probability that a state transition from an arbitrary frame to a next frame corresponds to a state transition from a keyword model to another keyword model or non-keyword model, and state transition probability that a state transition from an arbitrary frame to a next frame corresponds to a state transition from a non-keyword model to a keyword model. Then, the similarity calculator 370 outputs the calculated probabilities as similarities to the matching processor 390.

Incidentally, state transition probabilities include probability of state transition of a keyword model or non-keyword model from one state to a same state, state transition of a keyword model or non-keyword model from one state to another state, probability of state transition from a final state of a keyword model to an initial state of a non-keyword model, and probability of state transition from a final state of a non-keyword model to an initial state of a keyword model.

According to this embodiment, the similarity calculator 370 outputs the output probabilities and state transition probabilities calculated for each frame to the matching processor 390 as the similarities of the each frame.

The speech segment estimator 380 is fed with the microphone input signal entered by the user through the microphone 170, estimates speech segments based on the entered microphone input signal, and outputs the results of estimation to the matching processor 390 as speech segment information.

The matching processor 390 is fed with the output probabilities and state transition probabilities of each frame as well as the speech segment information produced by the speech segment estimator 380, performs amatchingprocess to calculate cumulative similarity which is the similarity of each combination of a keyword model and non-keyword model based on the speech segment information as well as the output probabilities and the state transition probabilities, and outputs the calculated cumulative similarity to the determinator 400.

Specifically, the matching processor 390 calculates one cumulative similarity for each keyword by fitting the output probabilities and state transition probabilities of each frame in the appropriate speech segment. According to this embodiment, the matching processor 390 calculates the cumulative similarity for each combination of a keyword model and non-keyword model using the Viterbi algorithm.

Incidentally, the Viterbi algorithm calculates cumulative similarities based on the output probability of each state occurring and the transition probability of each state transitioning to another state. It calculates cumulative probability along a path which represents transition from an arbitrary state i to a next state j, and thereby extracts a path along which state transition can take place, i.e., connections among HMMs and a combination of HMMs.

Also, according to this embodiment, one cumulative similarity is calculated for each keyword, but cumulative similarities are also calculated for combinations without a keyword, i.e., cumulative similarities are also calculated for non-keyword component models alone.

The determinator 400 is fed with the cumulative similarity calculated for each keyword by the matching processor 390 as well as the speech segment information produced by the speech segment estimator 380, decides on the keyword with the highest of the received cumulative similarities in the estimated speech segment as a keyword contained in the spontaneous speech, and outputs it to the system controller 240.

In so doing, the determinator 400 also takes into consideration cumulative similarities calculated for non-keyword component models alone and if a cumulative similarity for only a non-keyword component model turns out to be the highest of the received cumulative similarities, the determinator 400 determines that no keyword is contained in the spontaneous speech and outputs this determination to the system controller 240.

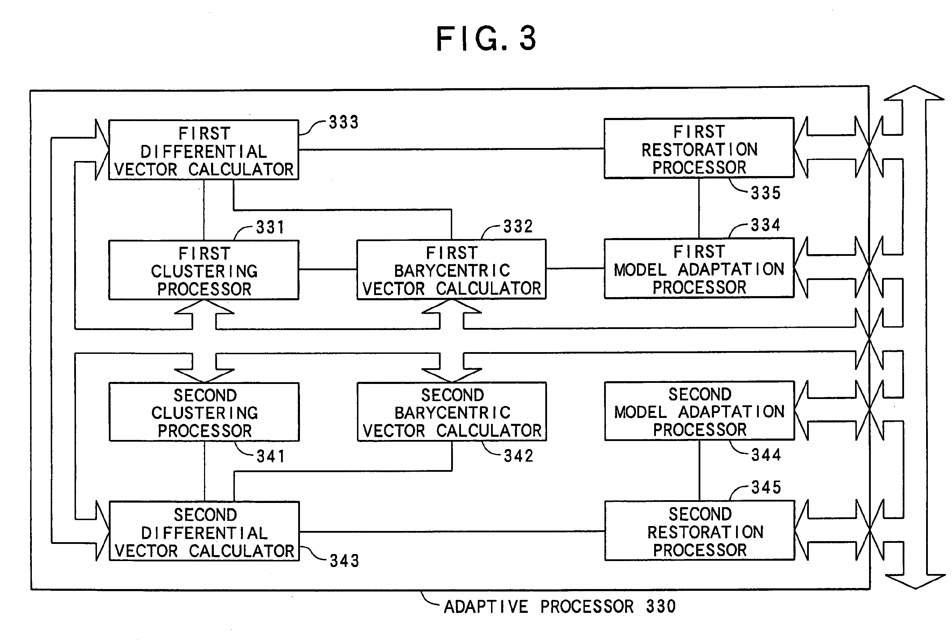

Next, the configuration and the operation of the adaptive processor according to this embodiment will be described with reference to FIG. 3.

FIG. 3 is a block diagram showing the configuration of the adaptive processor according to this embodiment.

Before speech recognition, the adaptive processor 330 according to this embodiment performs clustering, calculation of a barycentric vector, and calculation of a differential vector for keyword models and non-keyword models.

Incidentally, clustering of HMMs will always produce same results unless HMM data is changed by a speaker adaptation process or speaker adaptation is performed with respect to the HMMs by a new speaker. Thus, according to this embodiment, the adaptive processor 330 performs a data adaptation process after each speaker adaptation process, i.e., each time new HMM data adapted to a speaker is generated based on the HMM data stored in the HMM database 310.

As shown in FIG. 3, the adaptive processor 330 according to this embodiment performs a data adaptation process on keyword models and non-keyword models separately and comprises a first clustering processor 331 and a second clustering processor 341 which perform a clustering process on keyword models and non-keyword models to be subjected to a data adaptation process, a first barycentric vector calculator 332 and a second barycentric vector calculator 342 which calculate barycentric vectors based on the keyword models or the non-keyword models subjected to the clustering process, a first differential vector calculator 333 and a second differential vector calculator 343 which calculate differential vectors based on the keyword models or the non-keyword models subjected to the data adaptation process as well as on the calculated barycentric vectors, a first model adaptation processor 334 and a second model adaptation processor 344 which perform a data adaptation process on each HMM based on the calculated barycentric vectors and a noise model, a first restoration processor 335 and a second restoration processor 345 which restore each HMM subjected to the data adaptation process, based on the differential vectors.

Incidentally, for example, the first clustering processor 331 and the second clusteringprocessor 341 according to this embodiment serve as a classification device according to the present invention; and the first barycentric vector calculator 332 and the second barycentric vector calculator 342 serve as an extraction device according to the present invention.

Also, for example, the first differential vector calculator 333 and the second differential vector calculator 343 serve as a first calculation device according to the present invention; and the first model adaptation processor 334 and the second model adaptation processor 344 serve as a second calculation device according to the present invention.

Also, for example, the first restoration processor 335 and the second restoration processor 345 serve as a speech feature data generating device according to the present invention.

The first clustering processor 331 is fed with all the non-keyword models, i.e., all the non-keyword HMMs, stored in the HMM database 310, performs a clustering process on all the received non-keyword HMMs, and outputs the HMMs to the first barycentric vector calculator 332 and the first differential vector calculator 333 together with the HMMs' attribute data obtained as a result of the clustering process.

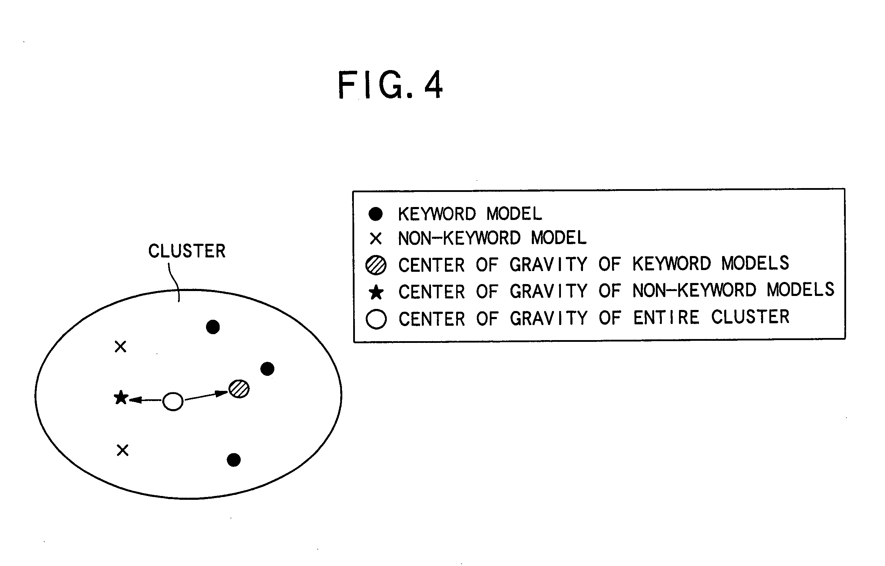

Specifically, as shown in FIG. 4, the first clustering processor 331 treats all the received non-keyword HMMs as a set, divides the set (hereinafter referred to as a "cluster") into a predetermined number of HMM clusters according to predetermined rules and outputs the HMMs to the first barycentric vector calculator 332 and the differential vector calculator 333 together with the attribute data which indicates to what cluster each of the HMMs belongs to.

The first clustering processor 331 performs the clustering process using unbalanced clustering which involves dividing a HMM cluster with the largest distortion into two except for the first division, and repeating division until a desired number of clusters are obtained.

Specifically, according to this embodiment, the first clustering processor 331 calculates a differential vector between each HMM belonging to each cluster and a center of gravity of the given cluster and selects the largest differential vector in each cluster as the largest distortion of that cluster.

Incidentally, the attribute data of an HMM is an identification code of the cluster to which the HMM belongs. For example, if the identification code of the cluster is a number, the attribute data is that number.

The first barycentric vector calculator 332 is fed with HMMs together with the HMMs' attribute data calculated by the first clustering processor 331, calculates the center of gravity of each cluster based on the received HMMs and attribute data, and outputs the calculated centers of gravity of the clusters as vector data (hereinafter referred to as "barycentric vector data") to the first model adaptation processor 334 and the first differential vector calculator 333.

Specifically, the first barycentric vector calculator 332 calculates an average of vectors of the HMMs in each received cluster as a barycentric vector.

The first differential vector calculator 333 is fed with the HMMs, their attribute data calculated by the first clustering processor 331, and the barycentric vectors of the clusters calculated by the first barycentric vector calculator 332.

The first differential vector calculator 333 calculates the differential vector between each HMM and the barycentric vector based on the received HMMs , attribute data, and barycentric vector data of the clusters to which the HMMs belong and outputs the calculated differential vectors of the HMMs to the first restoration processor 335 as the barycentric vector data by associating them with the HMMs' attribute data.

The first model adaptation processor 334 is fed with the barycentric vector data of the clusters calculated by the first barycentric vector calculator 332 as well as the noise model serving as an adaptive parameter, subjects the barycentric vector of each cluster to model adaptation based on the received noise model, and outputs the barycentric vectors of the cluster subjected to the model adaptation to the first restoration processor 335.

Specifically, the first model adaptation processor 334 combines the barycentric vector of each cluster with the noise model: it superimposes the noise model on the barycentric vector, and thereby performs an adaptation process of each barycentric vector (hereinafter referred to as a "model adaptation process") .

To combine a noise model with the barycentric vectors of clusters, this embodiment uses a known HMM combination technique such as PMC (Parallel Model Combination) technique or NOVO (Voice Mixed with Noise) technique.

The first restoration processor 335 is fed with the HMMs' attribute data, the HMMs' differential vectors calculated by the first differential vector calculator 333, and the clusters' barycentric vectors subjected to model adaptation by the first model adaptation processor 334.

The first restoration processor 335 restores the HMMs (hereinafter this process will be referred to as a "restoration process") based on the received barycentric vectors of the clusters and the differential vectors of the HMMs and outputs the restored HMMs as an output of the adaptive processor 330 to the similarity calculator 370.

Specifically, based on the attribute data, the first restoration processor 335 reverses the calculation of the differential vectors, i.e., adds the differential vector of each HMM to the adapted barycentric vector, and thereby restores the HMM.

Incidentally, although various components which perform a data adaptation process of non-keyword models have been described above, the adaptive processor 330 according to this embodiment also performs a data adaptation process of keyword models as shown in FIG. 3.

Specifically, according to this embodiment, the second clustering processor 341, the second barycentric vector calculator 342, the second differential vector calculator 343, the second model adaptation processor 344, and the second restoration processor 345 perform a clustering process, a process of calculating barycentric vectors (hereinafter referred to as a "barycentric vector calculation process") , a process of calculating differential vectors (hereinafter referred to as a "differential vector calculation process") , a model adaptation process, and a restoration process, respectively, on the keyword models stored in the HMM database 310, as in the case of the non-keyword models. The restored keyword HMMs are output to the similarity calculator 370 as an output from the adaptive processor 330.

Also, according to this embodiment, the adaptive processor 330 performs a clustering process, a barycentric vector calculation process, and a differential vector calculation process in advance on each HMM on a speaker-by-speaker basis. For a speech recognition process (described later) , the adaptive processor 330 outputs the HMMs adapted to each speaker based on the barycentric vectors, the differential vectors, and the attribute data of the HMMs calculated in advance to the similarity calculator 370.

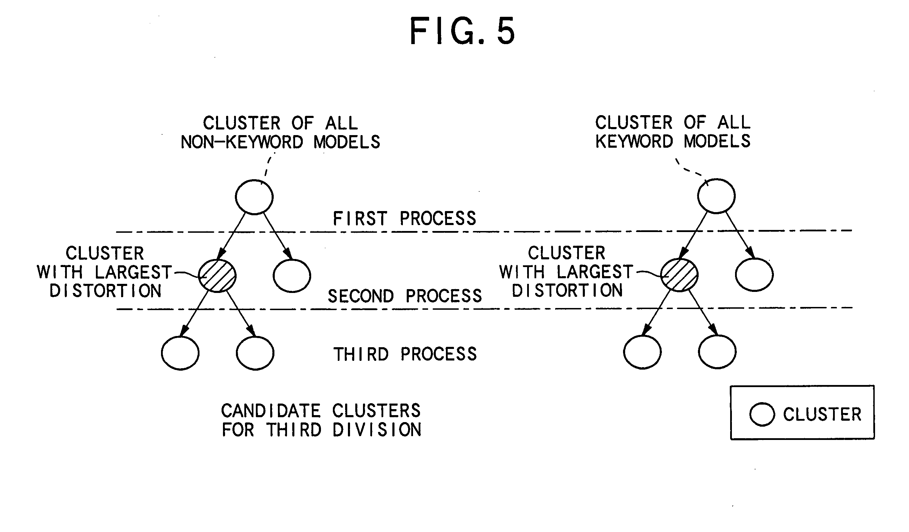

Next, principles of the clustering process and the barycentric vector calculation process will be described, separately for keyword models and non-keyword models, with reference to FIGs. 4 and 5.

FIG. 4 is a diagram illustrating how barycentric vectors are calculated according to this embodiment, while FIG. 5 is a diagram illustrating the clustering process according to this embodiment.

As shown in FIG. 4, when there are a plurality of non-keyword models and keyword models, barycentric positions of non-keyword models alone, keyword models alone, and a mixture of non-keyword models and keyword models differ among themselves.

Since this embodiment restores non-keyword models and keyword models based on their barycentric vectors, it performs speech recognition based on the non-keyword models and the keyword models adapted to the noise model based on their barycentric positions. Thus, the center of gravity of each cluster must be calculated exactly.

On the other hand, the generated non-keyword HMMs and the generated keyword HMMs differ in characteristics. Specifically, whereas a keyword model by nature needs to represent speech feature values of only one keyword, one non-keyword model represents speech feature values of a plurality of non-keywords.

Thus, since keyword models and non-keyword models differ in characteristics, a cluster containing both keyword models and non-keyword models cannot be divided into clusters of only keyword models or clusters of only non-keyword models, and the barycentric position calculated from such a cluster is not accurate enough compared to a cluster containing only keywordmodels or a cluster containing only non-keywordmodels .

Thus, this embodiment performs clustering processes separately on keyword models and non-keyword models, and calculates both barycentric vectors and differential vectors, separately for keyword models and non-keyword models, based on the resulting clusters.

The clustering process involves dividing a cluster of keyword models or non-keyword models into a predetermined number of clusters according to predetermined rules and calculating the barycentric vectors of the resulting clusters to restore the HMMs based on the barycentric vectors. This reduces processing load compared to when performing a model adaptation process individually on each HMM. The number of resulting clusters is smaller than the number of stored HMMs and the processing load is reduced accordingly.

According to this embodiment, as shown in FIG. 5, for example, when dividing non-keyword models three times, the first clustering processor 331 first divides a cluster of all the non-keyword models into two clusters, selects the cluster with the larger distortion among the two clusters, further divides it into two clusters, and further divides the cluster with the largest distortion among the cluster produced by the first division but left undivided and the two clusters produced by the second division. The first clustering processor 331 repeats this process until a desired number of clusters, i.e., a desired number of divisions, are reached.

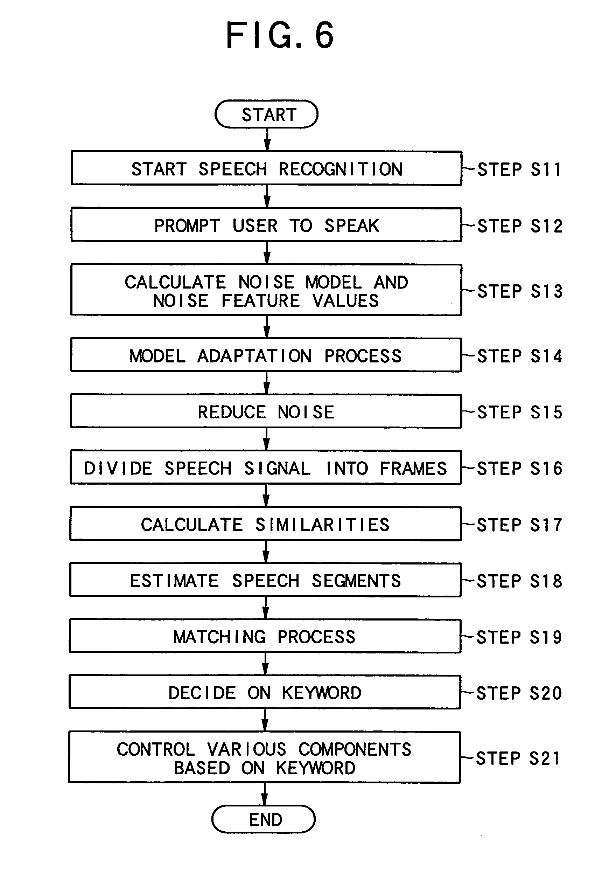

Next, operation of the speech recognition process according to this embodiment will be described with reference to FIG. 6.

FIG. 6 is a flowchart showing operation of the speech recognition process performed by the navigation apparatus 100 according to this embodiment.

When the user instructs the system controller 240 via the control panel 160 or via the speech recognizer 300 to perform speech recognition or when the system controller 240 judges during navigation processing that speech recognition needs to be performed (Step S11) , the system controller 240 prompts the user via the speech processing circuit 210 and the loudspeaker 220 to enter spontaneous speech through the microphone 170 (Step S12).

Next, when signals including utterances made by the user are entered, the system controller 240 makes the speech recognizer 300 perform speech recognition of the entered spontaneous speech as follows.

Upon receiving the spontaneous speech, the noise estimator 320 calculates a noise model based on an initial input signal in an initial segment, calculates noise feature values, and outputs them to the noise reducer 350 and the adaptive processor 330 (Step S13).

Next, upon receiving the noise model, the adaptive processor 330 performs a model adaptation process and a restoration process based on the barycentric vectors, the differential vectors, and the attribute data of the keyword models and the non-keyword models calculated through the clustering process in advance as well as on the received noise model and outputs the restored keyword models and the restored non-keywordmodels to the similarity calculator 370 (StepS14) .

Incidentally, the clustering process, the barycentric vector calculation process, and the differential vector calculation process performed by the adaptive processor 330 will be described later.

On the other hand, when the noise reducer 350 is fed with the microphone input signal and the noise feature values, it reduces noise in the entire microphone input signal based on the received noise feature data and outputs the denoised microphone input signal to the speech analyzer 360 (Step S15) .

Upon receiving the denoised microphone input signal, the speech analyzer 360 divides speech signals in a spontaneous speech segment of the received microphone input signal into frames, extracts feature values of the speech signals on a frame-by-frame basis, and outputs the extracted feature values to the similarity calculator 370 (Step S16).

When the similarity calculator 370 is fed with the adapted keyword models and the adapted non-keyword models as well as the frame-by-frame feature vectors, it calculates the similarity between each entered frame and each HMMby comparing the frame-by-frame feature values with the feature values of the HMMs stored in the HMM database 310, and outputs the calculated similarities to the matching processor 390 (Step S17) .

When the speech segment estimator 380 is fed with the microphone input signal, it estimates speech segments based on the microphone input signal, and outputs information about the estimated speech segments to the matching processor 390 (Step S18) .

When the matching processor 390 is fed with the output probabilities and the state transition probabilities of each frame as well as the speech segment information produced by the speech segment estimator 380, it performs a matching process to calculate cumulative similarity which is the similarity of each combination of a keyword model and non-keyword model based on the received information, and outputs the calculated cumulative similarity to the determinator 400 (Step S19) .

Upon receiving the cumulative similarity calculated for each keyword by the matching processor 390 as well as the speech segment information produced by the speech segment estimator 380, the determinator 400 decides on the keyword with the highest of the received cumulative similarities in the estimated speech segment as a keyword contained in the spontaneous speech, and outputs it to the system controller 240 (Step S20) .

Finally, the system controller 240 controls various components based on the keyword outputted from the determinator 400 (Step S21) and finishes the operation.

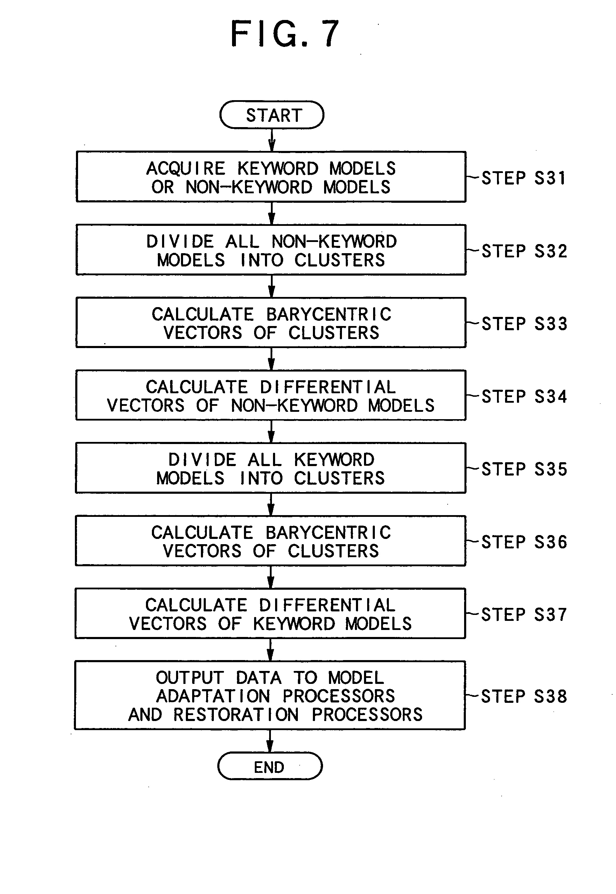

Now, the clustering process, the barycentric vector calculation process, and the differential vector calculation process performed by the adaptive processor 330 will be described with reference to FIG. 7.

FIG. 7 is a flowchart showing the operation of the clustering process, the barycentric vector calculation process, and the differential vector calculation process performed by the adaptive processor 330 according to this embodiment.

This operation is performed under control of the system controller 240 after the system controller 240 has been informed via the control panel 160 that the speaker has been changed or that a new speaker is registered and keyword models and non-keyword models have been adapted to the speaker.

First, the system controller 240 informs the speech recognizer 300 that a clustering process, a barycentric vector calculation process, and a differential vector calculation process will be performed, and makes the first clustering processor 331 and the second clustering processor 341 acquire all the keyword models or all the non-keyword models from the HMM database 310 (Step S31).

Then, the system controller 240 performs the following operations on each keyword model or non-keyword model.

To begin with, the system controller 240 makes the first clustering processor 331 perform a clustering process on all the non-keyword models and calculate the attribute data of each non-keyword model (Step S32).

Then, the system controller 240 makes the first barycentric vector calculator 332 calculate the barycentric vector of each non-keyword model based on the attribute data of the non-keyword model and outputs the results to the first model adaptation processor 334 (Step S33).

Then, the system controller 240 makes the first differential vector calculator 333 calculate the differential vector of each non-keyword model based on the attribute data and the barycentric vector of the non-keyword model (Step S34) .

Also, the system controller 240 makes the second clustering processor 341 perform a clustering process on all the keyword models and calculate the attribute data of each keyword model (Step S35).

Next, the system controller 240 makes the second barycentric vector calculator 342 calculate the barycentric vector of each keyword model based on the attribute data of the keyword model (Step S36).

Next, the system controller 240 makes the second differential vector calculator 343 calculate the differential vector of each keyword model based on the attribute data and the barycentric vector of the keyword model (Step S37).

Finally, the system controller 240 outputs the calculated barycentric vectors, the differential vectors, and the attribute data of keyword models and non-keyword models to the first model adaptation processor 334, the second model adaptation processor 344,the first restoration processor 335, and the second restoration processor 345 (Step S38).

Incidentally, although according to this embodiment, the clustering process, the barycentric vector calculation process, and the differential vector calculation process of non-keyword models are performed first and then the clustering process, the barycentric vector calculation process, and the differential vector calculation process of keyword models are performed, it is also possible to perform the clustering process first on the keyword models and then on the non-keyword models, or concurrently on both non-keyword models and keyword models.

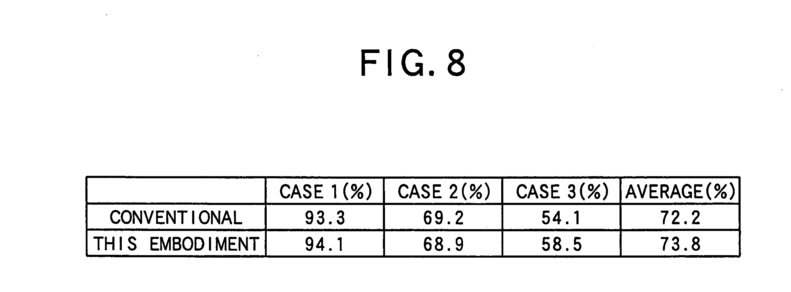

Next, with reference to FIG. 8, description will be given of experimental results on speech recognition rates in the speech recognition process according to this embodiment.

FIG. 8 is a table comparing speech recognition rates between the speech recognition process according to this embodiment and a conventional speech recognition process which does not separate keyword models and non-keyword models in the clustering process. Incidentally, FIG. 8 shows speech recognition rates in a vehicle.

In Case 1, recognition rates were obtained when only keywords were spoken. In a vehicle with navigation apparatus mounted, 150-word navigation commands spoken by each of 11 males and 9 females were recognized when the vehicle was running at each of three speeds--0 km/h, 50 km/h, and 100 km/h--and results were averaged.

In Case 2, recognition rates were obtained when spontaneous speech containing non-keywords shorter than keywords was uttered. In the vehicle with the navigation apparatus mounted, the 150-word navigation commands spoken by each of 11 males and 9 females were recognized when the vehicle was running at each of three speeds--0 km/h, 50 km/h, and 100 km/h--and results were averaged.

In Case 3, recognition rates were obtained when spontaneous speech containing non-keywords equal to or longer than keywords was uttered. In the vehicle with the navigation apparatus mounted, the 150-word navigation commands spoken by each of 5 males and 4 females were recognized when the vehicle was running at a speed of 100 km/h, and results were averaged.

It can be seen that the speech recognition process according to this embodiment generally achieved higher speech recognition rates than the conventional speech recognition process.

As described above, this embodiment comprises the HMM database 310 which prestores a plurality of HMMs; the first clustering processor 331 and the second clustering processor 341 which perform clustering processes on different types of HMM separately to divide them into clusters according to predetermined rules; the first barycentric vector calculator 332 and the second barycentric vector calculator 342 which calculate the barycentric vector of each cluster; the noise estimator 320 which acquires a noise model that represents a noise environment in which the spontaneous speech is uttered; the adaptive processor 330 which generates HMMs used to compare the feature values of the spontaneous speech based on the stored HMMs, the attribute data of the clusters produced by the clustering processes, the acquired barycentric vectors, and the noise model which represents the noise environment; the similarity calculator 370 which recognizes the spontaneous speech by comparing the feature values of each generated HMM with the feature values of the spontaneous speech; the matching processor 390; and the determinator 400.

With this configuration, this embodiment generates the HMMs used to compare the feature values of the spontaneous speech based on the stored HMMs, the attribute data of the clusters produced by the clustering processes, the acquired barycentric vectors, and the noise model which represents the noise environment, compares the feature values of the spontaneous speech against each of the generated HMMs, and thereby recognizes the spontaneous speech.

Since keyword HMMs and non-keyword HMMs adapted to the noise environment in which the spontaneous speech is uttered can be separately generated by clustering keyword models and non-keyword models separately, it is possible to prevent misrecognitions caused by great differences in characteristics between the speech feature values of the keyword models and non-keyword models, and perform speech recognition with high accuracy.

Also, according to this embodiment, the adaptive processor 330 comprises the first differential vector calculator 333 and the second differential vector calculator 343 that calculate the differential vector which represents the difference between each HMM and the barycentric vector of the cluster to which the HMM belongs, the first model adaptation processor 334 and the second model adaptation processor 344 which calculate adapted barycentric vectors that are barycentric vectors adapted to a speech environment by superimposing the noise model on each of the acquired barycentric vectors, and the first restoration processor 335 and the second restoration processor 345 which restore HMMs for use to compare the feature values of the spontaneous speech based on the differential vectors and the attribute data of the calculated HMMs as well as on the adapted barycentric vectors.

With this configuration, this embodiment calculates adapted barycentric vectors by superimposing the noise model on each of the acquired barycentric vectors and restores the HMMs for use to compare the feature values of the spontaneous speech based on the differential vectors and the attribute data of the calculated HMMs as well as on the adapted barycentric vectors.

Thus, when an adaptation process is performed on the barycentric vector of each cluster using the differential vector of each HMM, it can be performed more quickly than when it is performed on each HMM because the HMMs can be adapted to the noise environment.

Also, according to this embodiment, the barycentric vector calculators 332, 342 and the differential vector calculators 333, 343 are configured to calculate barycentric vectors and differential vectors, respectively, in advance.

With this configuration, since this embodiment can calculate the barycentric vector of each cluster and the differential vector of each HMM in advance, it can cluster keyword models and non-keyword models separately. Consequently, it is possible to prevent misrecognitions caused by great differences in characteristics between the speech feature values of the keywordmodels and that of the non-keyword models, and perform speech recognition quickly with high accuracy.

Also, according to this embodiment, when speech recognition is performed by classifying the feature values of uttered spontaneous speech into keywords to be recognized and non-keywords which do not constitute any keyword, HMMs of the keywords and HMMs of the non-keywords have been stored in the HMM database 310, and the first clustering processor 331 and the second clustering processor 341 divide the HMMs of the keywords and the HMMs of the non-keywords separately into clusters based on predetermined rules.

With this configuration, this embodiment divides the HMMs of the keywords and the HMMs of the non-keywords separately into clusters based on the predetermined rules.

Since the keyword HMMs and the non-keyword HMMs adapted to the noise environment in which the spontaneous speech is uttered can be generated separately, it is possible to prevent misrecognitions caused by great differences in characteristics between the speech feature values of the keyword models and the non-keyword models, and perform speech recognition quickly with high accuracy.

Also, this embodiment comprises the speech analyzer 360 which acquires spontaneous speech feature values that represent speech components of spontaneous speech by analyzing the spontaneous speech, the similarity calculator 370 which compares the spontaneous speech feature values acquired from at least part of speech segments of the microphone input signal against the adapted HMMs and thereby calculates a degree of similarity between characteristics of the feature values and the HMMs, the matching processor 390 which recognizes the spontaneous speech based on the calculated similarity, and the determinator 400.

With this configuration, this embodiment compares the spontaneous speech feature values acquired from at least part of the speech segments of the microphone input signal against the adapted HMMs and thereby calculates the degree of similarity between characteristics of the feature values and the HMMs, and then recognizes the spontaneous speech based on the calculated similarity.

Since keyword HMMs and non-keyword HMMs adapted to the noise environment in which the spontaneous speech is uttered can be generated separately, it is possible to prevent misrecognitions caused by great differences in characteristics between the speech feature values of the keyword models and non-keyword models, and perform speech recognition with high accuracy.

Incidentally, although according to this embodiment, the adaptive processor 330 performs the clustering process, the barycentric vector calculation process, and the differential vector calculation process in advance, alternatively it is possible to perform the clustering process, the barycentric vector calculation process, and the differential vector calculation process in each speech recognition process or upon instructions from the user via the control panel 160.

Also, although according to this embodiment, the speech recognition is performed by the navigation apparatus 100, similar speech recognition may be performed by mounting a computer and a recording medium in the navigation apparatus 100 equipped with the microphone 170, storing a speech recognition program capable of the data adaptation process on the recording medium, and making the computer read the program.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A speech recognition apparatus which recognizes spontaneous speech by comparing feature values that represent speech components of uttered spontaneous speech to prestored speech feature data that represents feature values of speech components of speech expected to be uttered, **characterized in that** the speech recognition apparatus comprising:
a storage device (310) which prestores a plurality of speech feature data;
a speech feature data acquisition device (330) which acquires speech feature data from the storage device (310) ;
a classification device (330) which classifies each type of the prestored speech feature data into a plurality of data groups based on predetermined rules;
an extraction device (330) which extracts data group feature data that represents feature values of each of the classified data groups;
an environmental data acquisition device (320) which acquires environmental data about conditions of an environment in which the spontaneous speech is uttered;
a generating device (330) which generates the speech feature data for use to compare the feature values of the spontaneous speech, based on the prestored speech feature data, the attribute data that represents attributes of the classified data groups, the acquired data group feature data, and the environmental data; and
a recognition device (370, 390, 400) which recognizes the spontaneous speech by comparing the generated speech feature data to the feature values of the spontaneous speech.

2. The speech recognition apparatus according to claim 1, **characterized in that** the extraction device (330) extracts vector data of a barycentric vector in each data group as the data group feature data for each of the classified data groups.

3. The speech recognition apparatus according to claim 1 or 2, **characterized in that** the generating device (330) comprises:
a first calculation device (333, 343) which calculates a differential feature value that represents a difference between each of the speech feature data and the data group feature data of the data group to which each item of the speech feature data belongs;
a second calculation device (334, 344) which calculates adaptive data group feature data that is adapted to a speech environment by superimposing the environmental data on the acquired data group feature data; and
a speech feature data generating device (335, 345) which generates the speech feature data for use to compare the feature values of the spontaneous speech, based on the calculated differential feature value of speech feature data, the attribute data, and the calculated adaptive data group feature data.

4. The speech recognition apparatus according to claim 3, **characterized in that** at least either the first calculation device (333, 343) or the extraction device (330) calculates the data group feature data or the differential feature value in advance.

5. The speech recognition apparatus according to claim 3 or 4, **characterized in that** when the extraction device (330) extracts the vector data of the barycentric vector as the data group feature data for each data group, the first calculation device (333, 343) calculates vector data of a differential vector between each of the speech feature data and the data group feature data of the data group to which the speech feature data belongs, as the differential feature value.

6. The speech recognition apparatus according to any one of claims 1 to 5, **characterized in that** when speech recognition is performed by classifying the feature values of the uttered spontaneous speech into keywords to be recognized and non-keywords which do not constitute any keyword;
speech feature data of the keywords and speech feature data of the non-keywords have been stored in the storage device (310); and
the classification device (330) classifies the speech feature data into a plurality of data groups separately for the keywords and non-keywords based on predetermined rules.

7. The speech recognition apparatus according to any one of claims 1 to 6, comprising:
a spontaneous speech feature value acquisition device (360) which acquires spontaneous speech feature values that represent speech components of the spontaneous speech, by analyzing the spontaneous speech,
**characterized in that** the recognition device (370, 390, 400) comprises:
a similarity calculation device (370) which compares the spontaneous speech feature values acquired from at least part of speech segments of the spontaneous speech to the generated speech feature data and thereby calculates a degree of similarity between characteristics of the feature values and the generated speech feature data, and
a spontaneous speech recognition device (390, 400) which recognizes the spontaneous speech based on the calculated similarity.

8. A speech recognition method which recognizes spontaneous speech by comparing feature values that represent speech components of uttered spontaneous speech to prestored speech feature data that represents feature values of speech components of speech expected to be uttered, **characterized in that** the speech recognition method comprising:
a speech feature data acquisition process which acquires speech feature data from a storage device (310) which prestores a plurality of speech feature data;
a classification process which classifies each type of the prestored speech feature data into a plurality of data groups based on predetermined rules;
an extraction process which extracts data group feature data that represents feature values of each of the classified data groups;
an environmental data acquisition process which acquires environmental data about conditions of an environment in which the spontaneous speech is uttered;
a generating process which generates the speech feature data for use to compare the feature values of the spontaneous speech, based on the prestored speech feature data, the attribute data that represents attributes of the classified data groups, the acquired data group feature data, and the environmental data; and
a recognition process which recognizes the spontaneous speech by comparing the generated speech feature data to the feature values of the spontaneous speech.

9. A recording medium on which a speech recognition program is recorded in computer-readable form, **characterized in that** the speech recognition program makes a computer recognize spontaneous speech by comparing feature values that represent speech components of uttered spontaneous speech to prestored speech feature data that represents feature values of speech components of speech expected to be uttered, and makes the computer function as:
a speech feature data acquisition device (330) which acquires speech feature data from a storage device (310) which prestores a plurality of speech feature data;
a classification device (330) which classifies each type of the prestored speech feature data into a plurality of data groups based on predetermined rules;
an extraction device (330) which extracts data group feature data that represents feature values of each of the classified data groups;
an environmental data acquisition device (320) which acquires environmental data about conditions of an environment in which the spontaneous speech is uttered;
a generating device (330) which generates the speech feature data for use to compare the feature values of the spontaneous speech, based on the prestored speech feature data, the attribute data that represents attributes of the classified data groups, the acquired data group feature data, and the environmental data; and
a recognition device (370, 390, 400) which recognizes the spontaneous speech by comparing the generated speech feature data to the feature values of the spontaneous speech.
